# EUROPEAN PATENT APPLICATION

(11) **EP 3 648 498 A1**
(43) Date of publication of application: **06.05.2020**
(21) Application number: 18838554.6
(22) Date of filing: 24.07.2018
(51) Int. Cl.: H04W 24/08

(54) **METHOD AND DEVICE FOR SELECTING BEAM**

(30) Priority: 25.07.2017 CN 201710614325
(71) Applicant: Huawei Technologies Co., Ltd., Longgang District Shenzhen, Guangdong 518129 (CN)
(72) Inventor: TANG, Xun, Shenzhen Guangdong 518129 (CN); QUAN, Wei, Shenzhen Guangdong 518129 (CN); ZHANG, Jian, Shenzhen Guangdong 518129 (CN)
(74) Representative: Pfenning, Meinig & Partner mbB
(86) International application number: PCT/CN2018/096895
(87) International publication number: WO 2019/020035

(57) **Abstract**

This application discloses a beam selection method and device. The method includes: receiving, by a terminal, first beam configuration information sent by a first network device, where the first beam configuration information is used to indicate a serving beam, and the serving beam is a downlink transmission beam that is of a first network device side and that is configured by the first network device for the terminal; and receiving, by the terminal, downlink data sent by the first network device through the serving beam. Therefore, after configuring the serving beam for the terminal, the first network device sends downlink scheduling information, data, and the like to the terminal through the serving beam, and the terminal does not need to monitor scheduling information on another beam any more, so that a quantity of blind detection times of the scheduling information can be reduced, and energy consumption of the terminal can be saved.

## Description

### CROSS-REFERENCE TO RELATED APPLICATIONS

This application claims priority to Chinese Patent Application No. 201710614325.2, filed with the Chinese Patent Office on July 25, 2017 and entitled "BEAM SELECTION METHOD AND DEVICE", which is incorporated herein by reference in its entirety.

### TECHNICAL FIELD

This application relates to the field of wireless communications technologies, and in particular, to a beam selection method and device.

### BACKGROUND

With the popularization of fiber, an increasing quantity of families can access the Internet through the fiber, that is, fiber to the home. Although the fiber to the home can provide a high-rate data transfer service for the families, there are also disadvantages such as high cost and long deployment time. For a dense area with large user density, deployment costs can be allocated. However, for a remote area with sparse population, a small quantity of families need to support expensive fiber costs. In addition, deployment of the fiber needs trenching and embedding and has requirements for deployment topography, and construction may be not allowed in some protected buildings. Therefore, the fiber to the home manner is of high rate, high costs, and large deployment difficulty, and is applicable to the dense area.

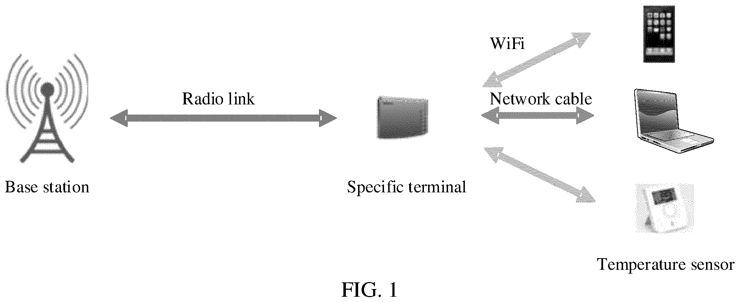

For the remote area or an area with a large construction difficulty, a wireless to the home, that is, wireless to the X (Wireless To The X, WTTx) manner is a better choice. The WTTx uses a wireless manner to resolve a last mile problem, and directly communicates with a base station through a wireless terminal specifically designed for the family. In addition, as shown in FIG. 1, the terminal may provide various interfaces, including a phone interface, a network cable interface, and a WiFi, to provide a communication function for another wireless device in a family.

In the prior art, a specific terminal, also referred to as a customer-premises equipment (Customer Premises Equipment, CPE), designed for a family scenario by using the WTTx technology has a same communication function as a common terminal, and does not have any special optimization. It can be found from a CPE deployment process that a requirement of the CPE for a network bandwidth is higher than that of the common terminal because traffic requirements of all devices in the family are integrated by the CPE. In addition, a traffic tariff of users in a family is relatively low, so that consumption of network traffic is also promoted.

Further, for a feature of a large requirement for the CPE traffic a spectral efficiency of the CPE needs to be further improved. Therefore, by deploying the CPE terminal on a high frequency carrier and using a beamforming (beamforming) technology (that is, using a beam to communicate with the CPE), the CPE traffic is offloaded, and the spectral efficiency can be improved, which is an ideal solution to support the WTTx network deployment.

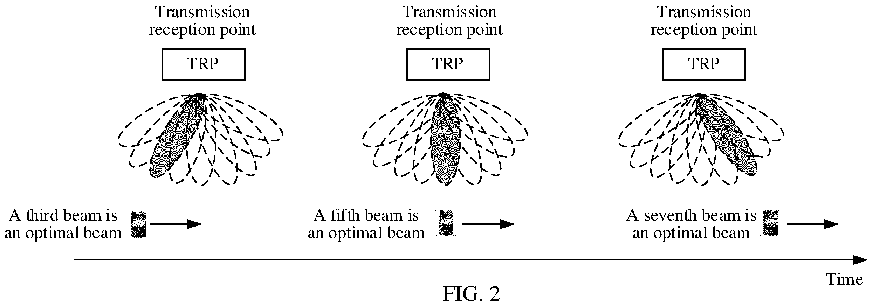

However, currently, a communication based on a beam is specifically designed for a mobile terminal, for example, a smartphone. Therefore, in a design process, there are requirements for beam search and beam track inevitably. To be specific, as shown in FIG. 2, with moving of the terminal, an optimal beam is selected to cover UE. However, because a location of the CPE is basically fixed, this design is redundant for the CPE.

### SUMMARY

Embodiments of this application provide a beam selection method and device, to optimize beam selection of a fixed terminal.

The method provided in the embodiments of this application includes the following steps.

A first aspect provides a beam selection method, including: receiving, by a terminal, first beam configuration information sent by a first network device, where the first beam configuration information is used to indicate a serving beam; and receiving, by the terminal, downlink data sent by the first network device through the serving beam. The serving beam is a downlink transmission beam that is of a first network device side and that is configured by the first network device for the terminal.

Therefore, after configuring the serving beam for the terminal, the first network device sends downlink scheduling information, data, and the like to the terminal through the serving beam, the terminal does not need to listen to scheduling information on another beam any more, and a quantity of blind detection times of the scheduling information can be reduced. To be specific, blink detection of the scheduling information is only performed on the serving beam, thereby energy consumption of the terminal can be saved.

In a possible design, the first beam configuration information is further used to indicate a candidate beam set, the candidate beam set includes at least one beam, the at least one beam is different from the serving beam, and the candidate beam set is a downlink transmission beam set that is of the first network device side and that is configured by the first network device for the terminal.

Therefore, when the terminal cannot receive the downlink data sent by the network device to the terminal through the serving beam, the candidate beam may be used as the serving beam, to further receive the downlink data continued to be sent by the network device to the terminal through the candidate beam.

In a possible design, the terminal reports first capability information to the first network device before receiving the first beam configuration information sent by the first network device, where the first capability information is used to indicate that the terminal is a fixed-location terminal.

Therefore, the terminal may notify, by reporting the first capability information, the first network device that the terminal is the fixed-location terminal, to further request the first network device to send the first beam configuration information to the terminal.

In a possible design, after the terminal reports the first capability information and before the terminal receives the first beam configuration information, or before the terminal reports the first capability information, the first network device may further send beam measurement configuration information to the terminal, where the beam measurement configuration information is used to instruct the terminal to separately measure beam signal strength of a plurality of downlink transmission beams of the first network device side, and the terminal measures beam signal strength values, for example, an RSRP or an RSRQ, respectively corresponding to the plurality of downlink transmission beams of the first network device side, and reports identification information of a beam satisfying a preset condition to the first network device, thereby the network device may be assisted to select the serving beam or the candidate beam.

In a possible design, before the terminal receives the first beam configuration information sent by the first network device, the terminal measures the beam signal strength values respectively corresponding to the plurality of downlink transmission beams of the first network device side, and reports the identification information of the beam satisfying the preset condition to the first network device, where the preset condition includes at least one of the following conditions: in first preset duration, the beam signal strength value is always greater than or equal to a first threshold; in second preset duration, a quantity of times that the beam signal strength value is less than or equal to a second threshold is less than or equal to a third threshold; in third preset duration, duration in which the beam signal strength value is less than or equal to a fourth threshold is less than or equal to a fifth threshold.

Therefore, the preset condition can ensure better stability of the beam satisfying the preset condition and assist the network device to select the serving beam or the candidate beam.

It should be understood that the specific preset condition and a type of the beam signal strength value related to the foregoing measurement may be specified by a protocol, or indicated by a measurement configuration message sent by the network device to the terminal. Even though all the above contents are fixed by the protocol, the measurement configuration message may alternatively be sent to the terminal through the network device, to start beam measurement.

It should be understood that the terminal separately measures the beam signal strength of the plurality of downlink transmission beams of the first network device side refers to that the terminal measures a signal strength value of reference signals separately sent by the first network device through the plurality of downlink transmission beams. Specifically, the reference signal may be included in an SS-block, for example, a synchronization signal or a demodulation reference symbol (Demodulation Reference Symbol, DMRS) in the SS-block, or the reference signal may be a channel state information-reference signal (Channel State Information-Reference Signal, CSI-RS). Further, the beam signal strength value may be one of: a reference signal received power (Reference Signal Received Power, RSRP) value, a reference signal received quality (Reference Signal Received Quality, RSRQ) value, or a signal to interference plus noise ratio (Signal To Interference Plus Noise Ratio, SINR) value. Optionally, the identification information of the beam is one of: a beam ID, a pilot port number corresponding to the beam, a time-frequency resource information index corresponding to the beam, a CSI-RS port number, a CSI-RS resource indicator (CSI-RS Resource Indicator, CRI), an SS-block index, or an SS-block timing index. Therefore, the terminal may measure the beam signal strength of the plurality of downlink transmission beams of the first network device side based on a plurality of pieces of reference information, measure the plurality of signal strength, and report the identification information of the beam by using a plurality of manners after the beam satisfying the preset condition is determined.

In a possible design, the terminal may sort the beam satisfying the preset condition in a descending order according to the beam signal strength values, and then report the sort result. Otherwise, the terminal may use the foregoing measurement process as an independent measurement event, and report the measurement event, for example, referred to as a beam stability measurement event. Alternatively, when a single beam satisfies the preset condition, the terminal may be triggered to report the identification information of the beam. Alternatively, after completing stability measurement of all the beams in a period of time, the terminal may perform reporting after all the measurement is completed. Therefore, the terminal may report the identification information of the beam satisfying the preset condition by using a plurality of manners.

In a possible design, the beam signal strength value is a beam signal strength value after filtering by an L3, a beam signal strength value reported by an L1, or a beam signal strength value obtained based on a reference signal sent by the first network device through a single measurement.

Therefore, there may be a plurality of choices for a type of the beam signal strength value, and the stability of the beam signal strength value is effectively considered.

In a possible design, when measuring the beam signal strength values of the plurality of downlink transmission beams of the first network device side, the terminal determines, based on a maximum beam signal strength value of each downlink transmission beam, a downlink receiving beam that is of a terminal side and that corresponds to each downlink transmission beam. Therefore, after receiving the first beam configuration information sent by the first network device, the terminal determines, based on the first beam configuration information, the downlink receiving beam that is of the terminal side and that corresponds to the serving beam, and a downlink receiving beam set that is of the terminal side and that corresponds to the candidate beam set.

Therefore, the terminal may further determine, based on the serving beam indicated by the first beam configuration information, the downlink receiving beam that is of the terminal side and that corresponds to the serving beam, and the downlink receiving beam set that is of the terminal side and that corresponds to the candidate beam set. The first beam configuration information indicates the downlink transmission beam of the first network device side and the downlink receiving beam of the terminal side, simplifying a selection process of an Rx beam of the terminal side.

In a possible design, the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal. Therefore, after receiving the first beam configuration information sent by the first network device, the terminal determines that the downlink receiving beam that is of the terminal side and that corresponds to the serving beam is the same as an uplink transmission beam that is of the terminal side and that corresponds to the serving beam, and the downlink receiving beam set that is of the terminal side and that corresponds to the candidate beam set is the same as an uplink transmission beam set that is of the terminal side and that corresponds to the candidate beam set.

Therefore, the terminal may send uplink data to the first network device based on the uplink transmission beam that is of the terminal side and that corresponds to the serving beam, and send an SR or a random access preamble to the first network device based on the uplink transmission beam that is of the terminal side and that corresponds to the candidate beam, to instruct the first network device to send the downlink data to the terminal through the candidate beam.

In a possible design, the candidate beam set includes a first candidate beam, and the first candidate beam and the serving beam are beams belonging to a same cell. Therefore, after receiving the beam configuration information sent by the first network device, the terminal sends the SR or the random access preamble to the first network device when determining a radio link failure based on a preset rule, so that the first network device sends the downlink data to the terminal through the first candidate beam.

Therefore, compared with the prior art, the terminal may need to perform a beam reselection process or a data link failure resuming process in the foregoing case, causing a relatively long data transmission outage time. In an embodiment of this application, the terminal may convert to the first candidate beam immediately through a pre-configured candidate beam set, to receive the downlink data. Therefore, by using the method provided in this embodiment of this application, data outage time can be reduced, and the data link failure resuming process or the beam reselection process can be avoided.

In a possible design, the candidate beam set includes a second candidate beam, the second candidate beam and the serving beam are beams belonging to different cells, and a cell corresponding to the second candidate beam is under jurisdiction of a second network device, and the first network device is the same as or different from the second network device. Therefore, after receiving the first beam configuration information sent by the first network device, the terminal feeds back a candidate beam set configuration complete message to the first network device when determining that a timing advance TA value of the cell corresponding to the second candidate beam is already stored; or the terminal obtains the TA value of the cell corresponding to the second candidate beam when determining that the TA value of the cell corresponding to the second candidate beam is not stored, and feeds back the candidate beam set configuration complete message to the first network device after obtaining the TA value of the cell corresponding to the second candidate beam.

Therefore, the terminal may switch, based on the obtained TA value when needed, to a cell in which the second network device is located, so that the second network device sends the downlink data to the terminal through the second candidate beam.

In a possible design, in a process of obtaining the TA value, and after completing downlink synchronization of the cell corresponding to the second candidate beam, the terminal obtains, based on random access indication information, random access resource configuration information of the cell corresponding to the second candidate beam, and sends a random access preamble to the second network device immediately. The random access indication information includes the random access resource configuration information, for example a time-frequency location indication of a random access resource, of the cell corresponding to the second candidate beam. Therefore, time of receiving random access public configuration can be reduced.

In a possible design, in the process of obtaining the TA value by the terminal, the first network device may coordinate resource with the second network device. The second network device allocates the random access resource configuration information of the cell corresponding to the second candidate beam for the terminal, and the first network device notifies the terminal of the random access resource configuration information. The random access resource configuration information includes a specific time-frequency location indication and a preamble index indication, so that the terminal does not collide with another random access terminal, thereby avoiding random access failure.

In a possible design, after receiving the beam configuration information sent by the first network device, the terminal sends the SR or the random access preamble to the second network device when determining a radio link failure based on a preset rule, so that the second network device sends the downlink data to the terminal through the second candidate beam. Compared with the prior art, the terminal may need to perform a beam reselection process or a data link failure resuming process in the foregoing case, causing a relatively long data transmission outage time. In an embodiment of this application, the terminal may convert to the candidate beam immediately through a pre-configured candidate beam set, to receive the downlink data. Therefore, by using the method provided in this embodiment of this application, data outage time can be reduced, and the data link failure resuming process or the beam reselection process can be avoided.

In a possible design, the terminal receives a switch command sent by the first network device after receiving the beam configuration information sent by the first network device, where the switch command is used to instruct the terminal to switch from the cell corresponding to the serving beam to the cell corresponding to the second candidate beam, and the switch command further carries the uplink resource configuration information of the cell corresponding to the second candidate beam. Then the terminal sends a switch complete message to the second network device based on the uplink resource configuration information and a TA value of the cell corresponding to the second candidate beam, so that the second network device continues to send the downlink data to the terminal through the second candidate beam.

Therefore, the first network device actively sends the switch command, to make the terminal switch to the cell corresponding to the second candidate beam, so that fast switch of the candidate beam can be realized, continuity of downlink data transmission can be ensured, data outage time can be reduced, and signaling overheads can be saved.

In a possible design, an RRC connection release message further carries a first indication, where the first indication is used to instruct, when the terminal reenters a connection state, the terminal to access to the cell corresponding to the serving beam before an RRC connection is released. Therefore, when entering the connection state from an idle state, the terminal does not need to perform the cell reselection, and the terminal directly performs the downlink synchronization in the cell corresponding to the serving beam before the RRC connection is released, receives a broadcast message, and enters the connection state through the random access process, thereby avoiding cell search process, and time of converting from the idle state to the connection state of the terminal can be saved.

In a possible design, the RRC connection release message further carries the random access resource information allocated for the terminal to access to the cell when the terminal reenters the connection state. The random access resource information includes a time-frequency location indication and a specific preamble index. For example, the terminal may send, on the serving beam before the RRC connection is released, a preamble indicated by the random access resource information, to avoid a random access conflict, thereby achieving rapid accessing.

In a possible design, when the terminal is in the idle state, the terminal receives a paging message sent by the first network device through the serving beam before the RRC connection is released.

Therefore, the terminal receives the broadcast message or the paging message sent by the first network device through the serving beam before the RRC connection is released, thereby reducing search overheads of searching public messages by the terminal.

A second aspect provides a beam selection method, including: sending, by a first network device, first beam configuration information to a terminal, where the first beam configuration information is used to indicate a serving beam configured for the terminal; and sending, by the first network device, downlink data to the terminal through the serving beam. The serving beam is a downlink transmission beam that is of a first network device side and that is configured by the first network device for the terminal.

Therefore, after configuring the serving beam for the terminal, the first network device sends downlink scheduling information, data, and the like to the terminal through the serving beam, the terminal does not need to listen to scheduling information on another beam any more, and a quantity of blind detection times of the scheduling information can be reduced. To be specific, blink detection of the scheduling information is only performed on the serving beam, thereby energy consumption of the terminal can be saved.

In a possible design, the first beam configuration information is further used to indicate a candidate beam set configured for the terminal, the candidate beam set includes at least one beam, the at least one beam is different from the serving beam, and the candidate beam set is a downlink transmission beam set that is of the first network device side and that is configured by the first network device for the terminal.

Therefore, when the terminal cannot receive the downlink data sent by the network device to the terminal through the serving beam, the candidate beam may be used as the serving beam, to further receive the downlink data continued to be sent by the network device to the terminal through the candidate beam.

In a possible design, the first network device receives first capability information reported by the terminal before sending the first beam configuration information to the terminal, where the first capability information is used to indicate that the terminal is a fixed-location terminal.

Therefore, the terminal may notify, by reporting the first capability information, the first network device that the terminal is the fixed-location terminal, to further request the first network device to send the first beam configuration information to the terminal.

In a possible design, before sending the first beam configuration information to the terminal, the first network device receives identification information that is reported by the terminal and that is of a beam satisfying a preset condition.

Therefore, the network device may be assisted to select the serving beam or the candidate beam.

In a possible design, the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal.

Therefore, the terminal may send uplink data to the first network device based on the uplink transmission beam that is of the terminal side and that corresponds to the serving beam, and send an SR or a random access preamble to the first network device based on the uplink transmission beam that is of the terminal side and that corresponds to the candidate beam, to instruct the first network device to send the downlink data to the terminal through the candidate beam.

In a possible design, the candidate beam set includes a first candidate beam, and the first candidate beam and the serving beam are beams belonging to a same cell. Therefore, the first network device receives the SR or the random access preamble sent by the terminal after sending the first beam configuration information to the terminal, and then the first network device sends the downlink data to the terminal through the first candidate beam.

Therefore, compared with the prior art, the terminal may need to perform a beam reselection process or a data link failure resuming process in the foregoing case, causing a relatively long data transmission outage time. In an embodiment of this application, the terminal may convert to the first candidate beam immediately through a pre-configured candidate beam set, to receive the downlink data. Therefore, by using the method provided in this embodiment of this application, data outage time can be reduced, and the data link failure resuming process or the beam reselection process can be avoided.

In a possible design, the candidate beam set includes a second candidate beam, the second candidate beam and the serving beam are beams belonging to different cells, and a cell corresponding to the second candidate beam is under jurisdiction of a second network device, and the first network device is the same as or different from the second network device. Therefore, the first network device receives a candidate beam set configuration complete message fed back by the terminal after sending the beam configuration information to the terminal.

Therefore, the terminal may switch, based on an obtained TA value when needed, to a cell in which the second network device is located, so that the second network device sends the downlink data to the terminal through the second candidate beam.

In a possible design, the first network device sends a switch command to the terminal after sending the first beam configuration information to the terminal, where the switch command is used to instruct the terminal to switch from the cell corresponding to the serving beam to the cell corresponding to the second candidate beam, and the switch command further carries uplink resource configuration information of the cell corresponding to the second candidate beam.

Therefore, the first network device actively sends the switch command, to make the terminal switch to the cell corresponding to the second candidate beam, so that fast switch of the candidate beam can be realized, continuity of downlink data transmission can be ensured, data outage time can be reduced, and signaling overheads can be saved.

In a possible design, when the terminal is in an idle state, the first network device sends a paging message to the terminal through the serving beam before an RRC connection is released.

Therefore, the terminal receives a broadcast message or the paging message sent by the first network device through the serving beam before the RRC connection is released, thereby reducing search overheads of searching public messages by the terminal.

A third aspect provides a terminal, including a sending unit, a receiving unit, and a processing unit. The receiving unit is configured to receive first beam configuration information sent by a first network device, where the first beam configuration information is used to indicate a serving beam, and the serving beam is a downlink transmission beam that is of a first network device side and that is configured by the first network device for the terminal. The receiving unit is further configured to receive downlink data sent by the first network device through the serving beam.

In a possible design, the first beam configuration information is further used to indicate a candidate beam set, the candidate beam set includes at least one beam, the at least one beam is different from the serving beam, and the candidate beam set is a downlink transmission beam set that is of the first network device side and that is configured by the first network device for the terminal.

In a possible design, the sending unit is further configured to report first capability information to the first network device before receiving the first beam configuration information sent by the first network device, where the first capability information is used to indicate that the terminal is a fixed-location terminal.

In a possible design, the processing unit is configured to: before the receiving unit receives the first beam configuration information sent by the first network device, measure beam signal strength values respectively corresponding to a plurality of downlink transmission beams of the first network device side, and report, through the sending unit, identification information of a beam satisfying a preset condition to the first network device, where the preset condition includes at least one of the following conditions: in first preset duration, the beam signal strength value is always greater than or equal to a first threshold; in second preset duration, a quantity of times that the beam signal strength value is less than or equal to a second threshold is less than or equal to a third threshold; in third preset duration, duration in which the beam signal strength value is less than or equal to a fourth threshold is less than or equal to a fifth threshold. In a possible design, the beam signal strength value is a beam signal strength value after filtering by an L3, a beam signal strength value reported by an L1, or a beam signal strength value obtained based on a reference signal sent by the first network device through a single measurement.

In a possible design, the processing unit is further configured to: determine, based on a maximum beam signal strength value of each downlink transmission beam, a downlink receiving beam that is of a terminal side and that corresponds to each downlink transmission beam; and after receiving the first beam configuration information sent by the first network device, the processing unit is further configured to: determine, based on the first beam configuration information, the downlink receiving beam that is of the terminal side and that corresponds to the serving beam, and a downlink receiving beam set that is of the terminal side and that corresponds to the candidate beam set.

In a possible design, the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal. The processing unit is further configured to: after the receiving unit receives the first beam configuration information sent by the first network device, determine that the downlink receiving beam that is of the terminal side and that corresponds to the serving beam is the same as the uplink transmission beam that is of the terminal side and that corresponds to the serving beam, and that the downlink receiving beam set that is of the terminal side and that corresponds to the candidate beam set is the same as the uplink transmission beam set that is of the terminal side and that corresponds to the candidate beam set.

In a possible design, the candidate beam set includes a first candidate beam, and the first candidate beam and the serving beam are beams belonging to a same cell. The sending unit is further configured to: after receiving the beam configuration information sent by the first network device, send an SR or a random access preamble to the first network device when the processing unit determines a radio link failure based on a preset rule, so that the first network device sends the downlink data to the terminal through the first candidate beam.

In a possible design, the candidate beam set includes a second candidate beam, and the second candidate beam and the serving beam are beams belonging to different cells, where a cell corresponding to the second candidate beam is under jurisdiction of a second network device, and the first network device is the same as or different from the second network device. The sending unit is further configured to: after receiving the first beam configuration information sent by the first network device, feed back a candidate beam set configuration complete message to the first network device when the processing unit determines that a timing advance TA value of the cell corresponding to the second candidate beam is already stored; or obtain the TA value of the cell corresponding to the second candidate beam when the processing unit determines that the TA value of the cell corresponding to the second candidate beam is not stored, and feedback the candidate beam set configuration complete message to the first network device through the sending unit after obtaining the TA value of the cell corresponding to the second candidate beam.

In a possible design, the receiving unit is further configured to receive a switch command sent by the first network device after receiving the beam configuration information sent by the first network device, where the switch command is used to instruct the terminal to switch from the cell corresponding to the serving beam to the cell corresponding to the second candidate beam, and the switch command further carries uplink resource configuration information of the cell corresponding to the second candidate beam. The processing unit sends a switch complete message to the second network device through the sending unit based on the uplink resource configuration information and the TA value of the cell corresponding to the second candidate beam, so that the second network device continues to send the downlink data to the terminal through the second candidate beam.

In a possible design, the receiving unit is further configured to: when the terminal is in an idle state, receive a paging message sent by the first network device through the serving beam before an RRC connection is released.

A fourth aspect provides a network device, including a sending unit, a receiving unit, and a processing unit. The sending unit is configured to send first beam configuration information to a terminal, where the first beam configuration information is used to indicate a serving beam configured for the terminal, and the serving beam is a downlink transmission beam that is of a network device side and that is configured by the network device for the terminal. The sending unit is further configured to send downlink data to the terminal through the serving beam.

In a possible design, the first beam configuration information is further used to indicate a candidate beam set configured for the terminal, the candidate beam set includes at least one beam, the at least one beam is different from the serving beam, and the candidate beam set is a downlink transmission beam set that is of the network device side and that is configured by the network device for the terminal.

In a possible design, the receiving unit is further configured to receive first capability information reported by the terminal before sending the first beam configuration information to the terminal, where the first capability information is used to indicate that the terminal is a fixed-location terminal.

In a possible design, the receiving unit is further configured to: before sending the first beam configuration information to the terminal, receive identification information that is reported by the terminal and that is of a beam satisfying a preset condition.

In a possible design, the serving beam is the downlink transmission beam that is of the network device side and that is configured by the network device for the terminal, and is also an uplink receiving beam that is of the network device side and that is configured by the network device for the terminal; and the candidate beam set is the downlink transmission beam set that is of the network device side and that is configured by the network device for the terminal, and is also an uplink receiving beam set that is of the network device side and that is configured by the network device for the terminal.

In a possible design, the candidate beam set includes a first candidate beam, and the first candidate beam and the serving beam are beams belonging to a same cell. The receiving unit is further configured to: receive an SR or a random access preamble sent by the terminal after sending the first beam configuration information to the terminal; and send the downlink data to the terminal through the first candidate beam.

In a possible design, the candidate beam set includes a second candidate beam, the second candidate beam and the serving beam are beams belonging to different cells, and a cell corresponding to the second candidate beam is under jurisdiction of a second network device, and the network device is the same as or different from the second network device. The receiving unit is further configured to receive a candidate beam set configuration complete message fed back by the terminal after sending the beam configuration information to the terminal.

In a possible design, the sending unit is further configured to send a switch command to the terminal after sending the first beam configuration information to the terminal, where the switch command is used to instruct the terminal to switch from the cell corresponding to the serving beam to the cell corresponding to the second candidate beam, and the switch command further carries uplink resource configuration information of the cell corresponding to the second candidate beam.

In a possible design, the sending unit is further configured to: when the terminal is in an idle state, send a paging message to the terminal through the serving beam before an RRC connection is released.

According to a fifth aspect, an embodiment of the present invention further provides a terminal. The terminal has a function of implementing a behavior of the terminal in the foregoing method embodiments. A structure of the terminal includes a transceiver and a processor. The transceiver is configured to communicate and interact with a network device. The processor is configured to support the terminal to perform a corresponding function in the foregoing methods. The terminal may further include a memory. The memory is coupled to the processor, and stores a necessary program instruction and necessary data of the terminal.

According to a sixth aspect, an embodiment of this application further provides a network device. The network device has a function of implementing a behavior of the network device in the foregoing method embodiments. A structure of the network device includes a processor and a transceiver. The transceiver is configured to communicate and interact with a terminal. The processor is configured to support the network device to perform a corresponding function in the foregoing methods. The network device may further include a memory. The memory is coupled to the processor and stores a necessary program instruction and necessary data of the network device.

According to a seventh aspect, an embodiment of this application further provides a communications system, where the communications system includes a network device and a terminal.

According to an eighth aspect, an embodiment of this application further provides a first non-transient computer storage medium, storing a computer executable instruction. The computer executable instruction is used to perform the beam selection method according to the first aspect of this application.

According to a ninth aspect, an embodiment of this application further provides a second non-transient computer storage medium, storing a computer executable instruction. The computer executable instruction is used to perform the beam selection method according to the second aspect of this application.

According to a tenth aspect, an embodiment of this application further provides a first computer program product, including a computer program stored on the first non-transient computer storage medium. The computer program includes a program instruction. When the program instruction is executed by a computer, the computer is enabled to perform the beam selection method according to the first aspect of this application.

According to an eleventh aspect, an embodiment of this application further provides a second computer program product, including a computer program stored on the second non-transient computer storage medium. The computer program includes a program instruction. When the program instruction is executed by a computer, the computer is enabled to perform the beam selection method according to the second aspect of this application.

According to a twelfth aspect, an embodiment of this application further provides a chip. The chip is connected to a memory, and is configured to read and execute a software program stored in the memory, to implement the method according to the first aspect and any possible design in the first aspect.

According to a thirteenth aspect, an embodiment of this application further provides a chip. The chip is connected to a memory, and is configured to read and execute a software program stored in the memory, to implement the method according to the second aspect and any possible design in the second aspect.

By using the method provided in the embodiments of this application, a terminal receives first beam configuration information sent by a first network device, where the first beam configuration information is used to indicate a serving beam; and the terminal receives downlink data sent by the first network device through the serving beam. The serving beam is a downlink transmission beam that is of a first network device side and that is configured by the first network device for the terminal. Therefore, after configuring the serving beam for the terminal, the first network device sends downlink scheduling information, data, and the like to the terminal through the serving beam, the terminal does not need to listen to scheduling information on another beam any more, and a quantity of blind detection times of the scheduling information can be reduced. To be specific, blink detection of the scheduling information is only performed for the serving beam, thereby energy consumption of the terminal can be saved.

### BRIEF DESCRIPTION OF DRAWINGS

FIG. 1 is a schematic diagram of a WTTx scenario in the background of this application;
FIG. 2 is a schematic diagram of beam track in the background of this application;
FIG. 3 is a schematic diagram of a 5G architecture according to an embodiment of this application;
FIG. 4 is an overview flowchart of a beam selection method according to an embodiment of this application;
FIG. 5 is a specific flowchart in which a first network device configures a serving beam for a terminal according to an embodiment of this application;
FIG. 6 is a schematic diagram of a camping beam and a candidate beam according to an embodiment of this application;
FIG. 7 is a schematic diagram of a candidate beam in a neighboring cell according to an embodiment of this application;
FIG. 8 is a specific flowchart in which a terminal obtains a TA value of a cell corresponding to a second candidate beam according to an embodiment of this application;
FIG. 9 is a schematic diagram of a unit composition of a terminal according to an embodiment of this application;
FIG. 10 is a schematic diagram of an entity structure of a terminal according to an embodiment of this application;
FIG. 11 is a schematic diagram of a unit composition of a network device according to an embodiment of this application;
FIG. 12 is a schematic diagram of an entity structure of a network device according to an embodiment of this application;
FIG. 13 is a schematic block diagram of a communications apparatus according to an embodiment of this application;
FIG. 14 is another schematic block diagram of a communications apparatus according to an embodiment of this application; and
FIG. 15 is still another schematic block diagram of a communications apparatus according to an embodiment of this application.

### DESCRIPTION OF EMBODIMENTS

The following describes the embodiments of this application with reference to accompanying drawings.

Embodiments of this application may be used in a cellular communications system, and mainly used in a 4G LTE or 5G new radio (New Radio, NR) system, including a multiple transmission reception point (Transmission Reception Point, TRP) scenario or a central unit-distributed unit (Central Unit-distributed Unit, CU-DU) split scenario.

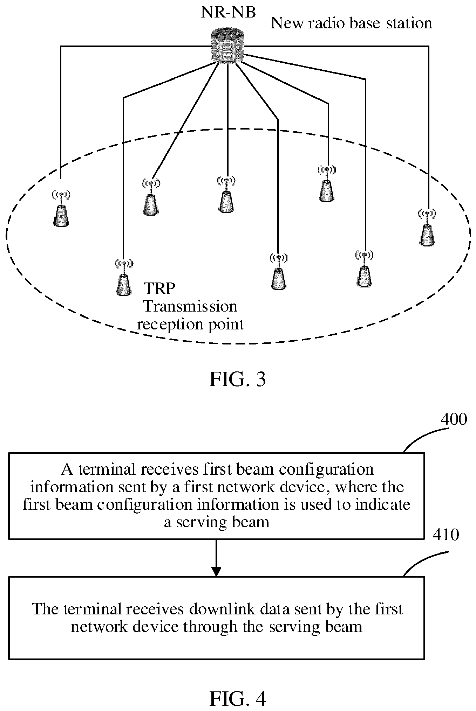

As an optional application scenario, as shown in FIG. 3, in a new radio base station (NR-NB), one or more TRPs may exist, and each TPR may communicate with a terminal through a beam.

Network elements related to the embodiments of this application include a network device and a terminal. The network device related to the embodiments of this application refers to an access device in which the terminal accesses to the mobile communications system in a wireless manner. The network device may be a NodeB (NodeB), an evolved NodeB (eNodeB), a base station in a 5G mobile communications system, a base station in a future mobile communications system, an access node in the TRP, a DU or a WiFi system, and the like. A specific technology and a specific device form used by the network device is not limited in the embodiments of this application. Specifically, the network device may alternatively be classified into a serving base station and an adjacent base station by using an example in which the network device is the base station. The serving base station is configured to determine a scheduling resource of the terminal, and send a resource configuration message to the terminal. In addition, the serving base station may send resource configuration information of the terminal to the adjacent base station. The adjacent base station is configured to receive the resource configuration information that is of the terminal and that is sent by the serving base station, coordinate with the serving base station to send and receive data, or use as a candidate base station for switching a cell of the terminal.

The terminal related to the embodiments of this application is a low mobility terminal, a fixed-location terminal, which may be user equipment (User Equipment, UE), for example, a WTTx terminal, a CPE terminal, a terminal deployed in a family, or a fixed-location high-power terminal. Specifically, the terminal may communicate with the network device, complete downlink measurement and send a measurement report to the network device, and receive the resource configuration information sent by the network device.

In a 5G high frequency system, because frequency increases, path loss increases and a coverage radius of a cellular cell reduces, causing a case in which more base stations are required for covering a same area, increasing network deployment costs. To increase a coverage radius of a high frequency cell, a beamforming (beamforming) technology may be used to converge signal energy through a relatively narrow beam and increase signal strength, to compensate for the path loss.

For the 5G high frequency system, downlink information (for example, a downlink synchronization signal and a broadcast message) of the cell needs to be sent through the beam. In 5G, a synchronization signal block (Synchronization Signal block, SS-block) is designed to carry a synchronization signal and the broadcast message. The terminal first selects the signal strength and related access control information of the cell by receiving the SS-block. When a determining condition of camping is satisfied, the terminal determines to camp in the cell. If there is uplink data that needs to be sent, the terminal may access to the cell through a random access process, and enter into a connection state. The terminal obtains initial beam measurement information by measuring the SS-block, determines a target receiving beam, and obtains the broadcast message through the target receiving beam. The target receiving beam herein is a downlink receiving beam of a terminal side and/or a downlink transmission beam of a network device side. The terminal obtains at least one of downlink beam pattern information, time-frequency resource information, and pilot allocation information of the cell through the broadcast message, and then measurement of all the downlink beams in the cell can be completed. It should be noted that the beam measured and obtained by the terminal is a beam indicated by the SS-block, a beam that is in the cell and that is used to send public information, for example, the broadcast message or public scheduling information. After the terminal enters into the connection state, the network device may configure a dedicated pilot, for example, a CSI-RS (Channel State Information Reference Signal, channel state information-reference signal), for the terminal, and use a dedicated beam to send the pilot. In this way, the terminal may measure the dedicated pilot. In the following descriptions, a public beam and the dedicated beam are not distinguished any more, and are collectively beams that can be detected by the terminal. It should be understood that the beams that may be detected by the terminal are the downlink transmission beams of the first network device side.

When the terminal accesses to the first network device, referring to FIG. 4, an embodiment of this application provides a beam selection method, including the following steps.

Step 400. A terminal receives first beam configuration information sent by a first network device, where the first beam configuration information is used to indicate a serving beam. The serving beam is a downlink transmission beam that is of a first network device side and that is configured by the first network device for the terminal.

Step 410. The terminal receives downlink data sent by the first network device through the serving beam.

In a possible design, the first beam configuration information is further used to indicate a candidate beam set, the candidate beam set includes at least one beam, and the at least one beam is different from the serving beam. The candidate beam set is a downlink transmission beam set that is of the first network device side and that is configured by the first network device for the terminal.

In a possible design, before step 400, to be specific, before the terminal receives the first beam configuration information sent by the first network device, the terminal reports first capability information to the first network device, where the first capability information is used to indicate that the terminal is a low mobility terminal, a terminal deployed in a family, or a fixed-location terminal. For example, the terminal is indicated as a WTTx terminal, a CPE terminal, or a fixed-location high power terminal.

In a possible design, after the terminal reports the first capability information and before the terminal receives the first beam configuration information, or before the terminal reports the first capability information, the first network device may further send beam measurement configuration information to the terminal, where the beam measurement configuration information is used to instruct the terminal to separately measure beam signal strength of a plurality of downlink transmission beams of the first network device side, and the terminal measures beam signal strength values, for example, an RSRP or an RSRQ, respectively corresponding to the plurality of downlink transmission beams of the first network device side, and reports identification information of a beam satisfying a preset condition to the first network device, assisting the network device to select the serving beam or the candidate beam.

Optionally, the beam measurement configuration information may further carry the preset condition, where the preset condition includes at least one of the following conditions.
(1) in first preset duration, the beam signal strength value is always greater than or equal to a first threshold;
(2) in second preset duration, a quantity of times that the beam signal strength value is less than or equal to a second threshold is less than or equal to a third threshold; and
(3) in third preset duration, duration in which the beam signal strength value is less than or equal to a fourth threshold is less than or equal to a fifth threshold.

For example, the preset condition may include (1) and (2), or (1) and (3).

Optionally, the beam signal strength value is a beam signal strength value after filtering by an L3, a beam signal strength value reported by an L1, or a beam signal strength value obtained based on a single measurement of a reference signal. The L1 (layer 1) herein is a physical layer, and the L3 (layer 3) is a radio resource control (Radio Resource Control, RRC) layer. The beam signal strength value reported by the L1 is usually obtained after performing filtering processing or average processing on the beam signal strength value obtained based on multiple times of measurement of the reference signal. The beam signal strength value reported by the L1 is usually affected by a channel change, causing fluctuation to a certain extent. However, a beam quality obtained after filtering by the L3 is relatively stable.

It should be understood that the specific preset condition and a type of the beam signal strength value related to the foregoing measurement may be specified by a protocol, or indicated in the measurement configuration message sent by the network device to the terminal. Even though all the above contents are fixed by the protocol, the measurement configuration message may alternatively be sent to the terminal through the network device, to start beam measurement.

For example, the type of the beam signal strength value in the protocol is the beam signal strength value reported by the L1, and the preset condition is (1). The measurement configuration message may indicate that the specific first preset duration is 10s, and the first threshold is -80 dBm.

For another example, the measurement configuration message indicates that the preset condition uses a combination of (1) and (2), that the beam signal strength value reported by the L1 is used for determining (1), and that the beam signal strength value obtained based on the single measurement of the reference signal is used for determining (2). Another parameter value may alternatively be indicated by the measurement configuration message.

It should be understood that the terminal separately measures the beam signal strength of the plurality of downlink transmission beams of the first network device side refers to that the terminal measures signal strength values of reference signals separately sent by the first network device through the plurality of downlink transmission beams. Specifically, the reference signal may be included in an SS-block, for example, a synchronous signal or a demodulation reference symbol (Demodulation Reference Symbol, DMRS) in the SS-block, or the reference signal may be a channel state information-reference signal (Channel State Information-Reference Signal, CSI-RS). Further, the beam signal strength value may be one of: a reference signal received power (Reference Signal Received Power, RSRP) value, a reference signal received quality (Reference Signal Received Quality, RSRQ) value, or a signal to interference plus noise ratio (Signal To Interference Plus Noise Ratio, SINR) value.

Optionally, the identification information of the beam is one of: a beam ID, a pilot port number corresponding to the beam, a time-frequency resource information index corresponding to the beam, a CSI-RS port number, a CSI-RS resource indicator (CSI-RS Resource Indicator, CRI), an SS-block index, or an SS-block timing index.

Specifically, the terminal may sort the beam satisfying the preset condition in a descending order according to the beam signal strength, and then report the sort result. Alternatively, the terminal may use the foregoing measurement process as an independent measurement event, and report the measurement event, for example, referred to as a beam stability measurement event. Alternatively, when a single beam satisfies the preset condition, the terminal may be triggered to report the identification information of the beam. Alternatively, after completing stability measurement of all the beams in a period of time, the terminal may alternatively perform reporting after all the measurement is completed.

Therefore, when the identification information of the beam reported by the terminal is received, the first network device may send the first beam configuration information to the terminal. For example, the terminal may report the beam satisfying the preset condition and determine a report sequence based on the beam signal strength values separately corresponding to the beam satisfying the preset condition, and then send the identification information of the beam to the first network device successively. The first network device determines, based on a sequence of the identification information of the received beam, the serving beam and the candidate beam set, and sends the first beam configuration information to the terminal. In addition, the configuration information may include reference signal configuration information of a downlink beam or pilot port information of the downlink beam, for example, DMRS pilot port configuration information. The terminal demodulates, through the DMRS pilot, a control command and downlink data sent through a corresponding beam. The control command may be downlink control information (Downlink Control Information, DCI) transmitted by a physical downlink control channel (Physical Downlink Control Channel, PDCCH). The downlink data may be data carried by a physical downlink shared channel (Physical Downlink Shared Channel, PDSCH). To be specific, the terminal detects the beam signal through the pilot port.

In the foregoing process, after configuring the serving beam for the terminal, the first network device sends downlink scheduling information, data, and the like to the terminal through the serving beam, the terminal does not need to listen to scheduling information on another beam any more, and a quantity of blind detection times of the scheduling information can be reduced. To be specific, blink detection of the scheduling information is only performed on the serving beam, thereby energy consumption of the terminal can be saved.

In addition, when measuring the beam signal strength values of the plurality of downlink transmission beams of the first network device side, the terminal may further determine, based on a maximum beam signal strength value of each downlink transmission beam, a downlink receiving beam that is of a terminal side and that corresponds to each downlink transmission beam. Specifically, the terminal may separately receive, by using the plurality of downlink receiving beams of the terminal side, the reference signal sent by the network device through each downlink transmission beam, to obtain the beam signal strength value, and determines, based on the obtained maximum beam signal strength value, the downlink receiving beam that is of the terminal side and that corresponds to the downlink transmission beam.

For example, the first network device sends the reference signal through a downlink transmission beam 1, and the terminal separately receives the reference signal through a downlink receiving beam 1, a downlink receiving beam 2, and a downlink receiving beam 3, to obtain three beam signal strength values. Assuming that the beam signal strength value measured and obtained by receiving the reference signal by the terminal through the downlink receiving beam 3 is the maximum, it is determined that the downlink transmission beam 1 corresponds to the downlink receiving beam 3. To be specific, the terminal receives a signal of the downlink transmission beam 1 by using the downlink receiving beam 3, and it may also be considered that the downlink transmission beam 1 and the downlink receiving beam 3 form a beam pair.

Therefore, the terminal may further determine, based on the serving beam indicated by the first beam configuration information, the downlink receiving beam that is of the terminal side and that corresponds to the serving beam, and a downlink receiving beam set that is of the terminal side and that corresponds to the candidate beam set. The first beam configuration information indicates the downlink transmission beam of the first network device side and the downlink receiving beam of the terminal side, simplifying a selection process of an Rx beam of the terminal side.

In a possible design, the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal.

For example, for a time division duplex (Time division duplex, TDD) system, the downlink transmission beam of the network device side is the same as the uplink receiving beam of the network device side. To be specific, the network device may send the downlink data to the terminal through the serving beam, and receive, through the serving beam, uplink data sent by the terminal. Similarly, the terminal determines that the downlink receiving beam that is of the terminal side and that corresponds to the serving beam is the same as an uplink transmission beam that is of the terminal side and that corresponds to the serving beam, and the downlink receiving beam set that is of the terminal side and that corresponds to the candidate beam set is the same as an uplink transmission beam set that is of the terminal side and that corresponds to the candidate beam set. Essentially, different beams are different antenna weights. The weights can be used to receive the beams, and can alternatively be used to send the beams.

For another example, for a frequency division duplex (Frequency division duplex, FDD) system, the downlink transmission beam of the network device side is different from the uplink receiving beam of the network device side. To be specific, the network device may send the downlink data to the terminal through the serving beam, and receive, through different beams, uplink data sent by the terminal. Similarly, the terminal determines that the downlink receiving beam that is of the terminal side and that corresponds to the serving beam is different from the uplink transmission beam that is of the terminal side and that corresponds to the serving beam, and the downlink receiving beam set that is of the terminal side and that corresponds to the candidate beam set is different from the uplink transmission beam set that is of the terminal side and that corresponds to the candidate beam set. In this case, the first network device may send second beam configuration information, to indicate the uplink receiving beam that is of the first network device side and that is configured by the first network device for the terminal, and the uplink receiving beam set that is of the first network device side and that is configured by the first network device for the terminal. A specific configuration method is not limited in this application.

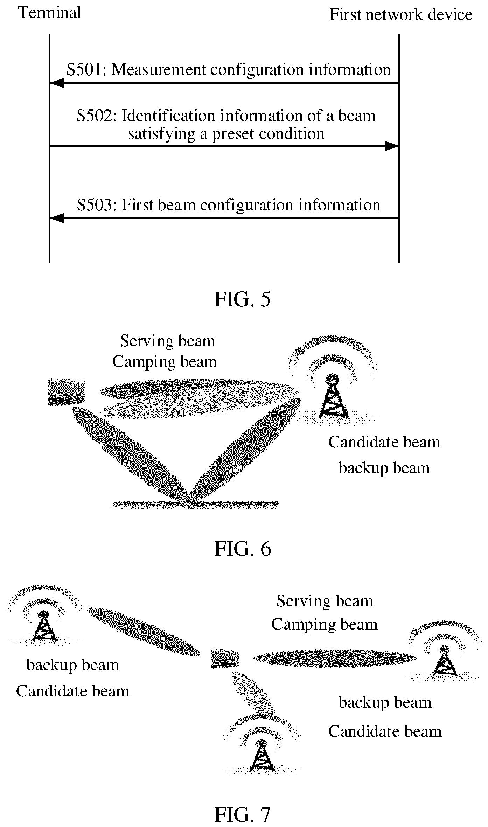

The following describes a specific procedure in which a first network device configures a serving beam for a terminal with reference to Table 1 and FIG. 5.

S501. A first network device sends a measurement configuration message to a terminal.

The measurement configuration message indicates that the type of the beam signal strength value is the beam signal strength value reported by the L1, and the preset condition is (1). The first preset duration is 8s, and the first threshold is -85 dBm.

Optionally, the first network device may configure the terminal to report identification information of the first N beams having a largest beam strength value, for example, N = 3.

S502. The terminal reports, based on measurement configuration information sent by the first network device, identification information of a beam satisfying a preset condition.

For example, the terminal performs beam measurement, to obtain a plurality of beam measurement results, and selects identification information of the first three beams having the largest average value of the beam signal strength in the beam satisfying the preset condition, and reports the identification information to the first network device. It should be understood that the terminal may obtain a plurality of beam measurement results of a serving cell and a plurality of beam measurement results of a neighboring cell, and then separately reports the identification information of the three beams to the serving cell and the neighboring cell, or selects the identification information of three beams from all the beam measurement results of the serving cell and the neighboring cell, and report the identification information.

For example, referring to Table 1, it is assumed that a cell to which the terminal accessed generates 20 beams in total, and a beam ID range is 0 to 19. As shown in Table 1, the terminal reports the identification information of the first three beams having the largest average value of the beam signal strength in the beam satisfying the preset condition and a corresponding average value of the beam signal strength.

**Table 1**

| Beam ID | RSRP value |
|---|---|
| Beam 2 | RSRP = -70 dBm |
| Beam 3 | RSRP = -75 dBm |
| Beam 6 | RSRP = -80 dBm |

In addition, it should be understood that the identification information of the beam reported by the terminal to the first network device may not only include identification information of a beam in a first cell (that is, the serving cell), and may further include identification information of a beam in another cell (that is, the neighboring cell). For example, when the terminal is in a center of the first cell, a beam signal strength value of the beam in the first cell is greater than a beam signal strength value of the beam in the neighboring cell. However, when the terminal is at the edge of the first cell, a difference between the beam signal strength value of the beam in the first cell and the beam signal strength value of the beam in the neighboring cell may be relatively small, or the beam signal strength value of the beam in the neighboring cell is greater than the beam signal strength value of the beam in the first cell. When the identification information of the beam reported by the terminal to the first network device further includes identification information of the beam in the neighboring cell, if the identification information is the beam ID, a cell ID needs to be added on a basis of the beam ID, to identify different beams.

S503. The first network device sends first beam configuration information to the terminal.

For example, the first network device determines, based on Table 1, a beam 2 as the serving beam and a beam 3 as the candidate beam.

In the foregoing process, after configuring the serving beam for the terminal, the first network device sends downlink scheduling information, data, and the like to the terminal through the serving beam, the terminal does not need to listen to scheduling information on another beam any more, and a quantity of blind detection times of the scheduling information can be reduced, and energy consumption of the terminal can be saved.

When the first beam configuration information is further used to indicate the candidate beam set, a case in which the terminal converts from receiving the downlink data through the serving beam to receiving the downlink data through the candidate beam may occur. The following respectively discusses how the terminal converts from receiving the downlink data through the serving beam to receiving the downlink data through the candidate beam with reference to two cases. One is that the candidate beam and the serving beam are beams belonging to a same cell, and another is that the candidate beam and the serving beam are beams belonging to different cells.

### Case 1:

The candidate beam set includes a first candidate beam, and the first candidate beam and the serving beam are beams belonging to a same cell.

It should be learned that the first candidate beam herein is only an example, and may refer to any beam that belongs to a same cell as the serving beam and that is in the candidate beam set.

In this case, that the terminal converts from receiving the downlink data through the serving beam to receiving the downlink data through the candidate beam specifically includes but is not limited to the following scenarios.

After the terminal receives the beam configuration information sent by the first network device, when the terminal determines a radio link failure (for example, when the terminal receives the downlink data through the serving beam, the transmission outages, or quality of the beam signal is less than a first preset threshold) based on a preset rule, the terminal sends a beam adjustment request message to the first network device. The beam adjustment request message herein may be a scheduling request (Scheduling Request, SR), a random access preamble, or another dedicated message. Optionally, the terminal receives the beam adjustment configuration information sent by the first network device through the first candidate beam. The beam adjustment configuration information is used to instruct the terminal to adjust the first candidate beam to the serving beam, so that the first network device sends the downlink data to the terminal through the first candidate beam.

Specifically, when the quality of the serving beam suddenly becomes poor, the downlink data cannot be normally received, or the radio link failure of the beam is determined. For example, referring to FIG. 6, the signal quality of the serving beam may become poor because of a reason such as block. In this case, the terminal can directly send the beam adjustment request message to the first network device on the uplink transmission beam that is of the terminal side and that corresponds to the first candidate beam, so that the first network device sends the downlink data to the terminal through the first candidate beam.

It should be understood that the first threshold herein may be configured by the first network device, or specified by a protocol.

Therefore, in the foregoing method, the beam adjustment request information is sent to the first network device, the first network device is requested to adjust the serving beam for the terminal in time, and the downlink data is continued to be received through the candidate beam. Compared with the prior art, the terminal may need to perform a beam reselection process or a data link failure resuming process in the foregoing case, causing a relatively long data transmission outage time. In an embodiment of this application, the terminal may convert to the first candidate beam immediately through a pre-configured candidate beam set, to receive the downlink data. Therefore, by using the method provided in this embodiment of this application, data outage time can be reduced, and the data link failure resuming process or the beam reselection process can be avoided. When the candidate beam set includes a plurality of candidate beams, the terminal sends an SR or a random access preamble to a base station through the uplink transmission beams that are of the terminal side and that separately correspond to the plurality of candidate beams successively, and wait for a response sent by the network device on a candidate beam.

### Case 2:

The candidate beam set includes a second candidate beam, the second candidate beam and the serving beam are beams belonging to different cells, and a cell corresponding to the second candidate beam is under jurisdiction of a second network device, and the first network device is the same as or different from the second network device. It should be learned that the second candidate beam herein is only an example, and may refer to any beam that belongs to different cells from the serving beam and that is in the candidate beam set.

It should be understood that in the embodiments of this application, to prevent all beams in the cell corresponding to the serving beam from being invalid, and to perform beam adjustment rapidly, the beam in the neighboring cell is necessarily to be used as the candidate beam. For example, referring to FIG. 7, a first network device configures a serving beam and two candidate beams for the terminal, and the two candidate beams and the serving beam belong to different cells.

In a possible design, after receiving the first beam configuration information sent by the first network device, the terminal determines whether to store a timing advance (Timing Advance, TA) value of the cell corresponding to the second candidate beam. The terminal feeds back a candidate beam set configuration complete message to the first network device when determining that the timing advance TA value of the cell corresponding to the second candidate beam is already stored; or the terminal obtains the TA value of the cell corresponding to the second candidate beam when determining that the TA value of the cell corresponding to the second candidate beam is not stored, and feeds back the candidate beam set configuration complete message to the first network device after obtaining the TA value of the cell corresponding to the second candidate beam.

Optionally, the terminal may query a local camping historical record, to determine whether to store the TA value of the cell corresponding to the second candidate beam. The camping historical record includes a serving cell ID, a serving beam identifier, a TA value, and the like.

It should be noted that even though for a same cell, the TA value corresponding to each cell may also be different. Therefore, it may further be required that each beam corresponds to a specific TA value, but not a plurality of beams in a same cell share a same cell-level TA value. Therefore, when the terminal queries the local camping historical record, whether a TA value corresponding to a current beam exists needs to be checked, but not only whether a TA value of a corresponding cell exists is checked. For example, when a plurality of TRPs exist, the beam may come from the plurality of TRPs. Different geographic locations result in different TA values corresponding to different beams. The network device can notify, through a broadcast message or a dedicated configuration message, the terminal that each beam has an independent TA value.

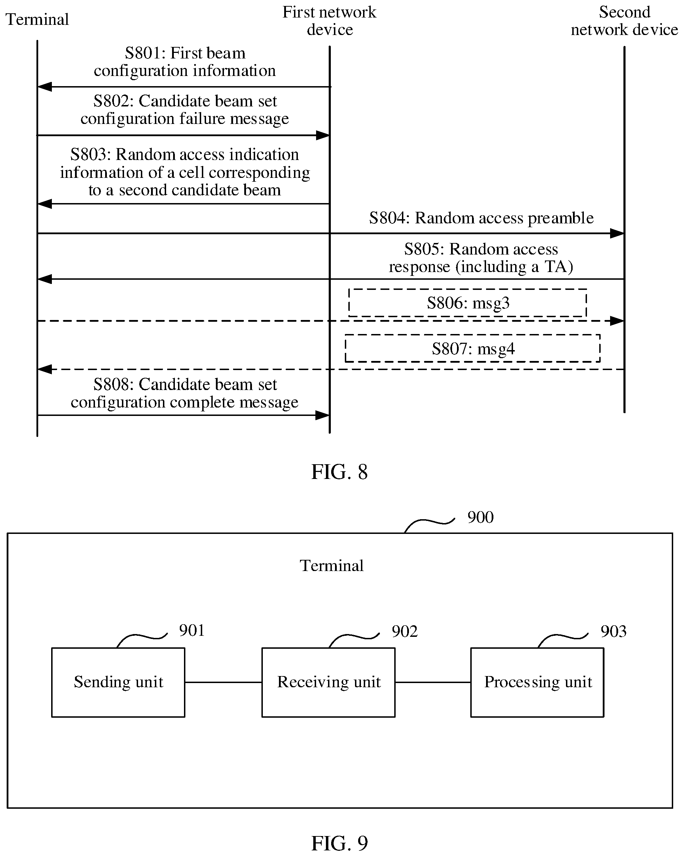

Referring to FIG. 8, the following describes an example in which a terminal obtains the TA value of the cell corresponding to the second candidate beam.

S801. A terminal receives first beam configuration information sent by a first network device, where the first beam configuration information is used to indicate a serving beam and a candidate beam set.

S802. The terminal feeds back a candidate beam set configuration failure message to the first network device when determining that a TA value of a cell corresponding to a second candidate beam is not stored.

S803. The terminal receives random access indication information that is sent by the first network device and that is of the cell corresponding to the second candidate beam.

In a possible design, the random access indication information includes information that is used by a second network device to receive a beam of a random access preamble and that is about a corresponding data receiving moment.

S804. The terminal sends a random access preamble to a second network device.

Specifically, the terminal needs to obtain random access resource configuration information of the cell corresponding to the second candidate beam, and sends the random access preamble to the second network device based on the random access resource configuration information. The terminal may send the random access preamble to the second network device by using, but not limited to the following two manners.

Manner 1: After completing downlink synchronization of the cell corresponding to the second candidate beam, the terminal obtains, based on the random access indication information, the random access resource configuration information of the cell corresponding to the second candidate beam, and sends the random access preamble to the second network device immediately. The random access indication information includes random access resource configuration information, for example a time-frequency location indication of a random access resource, of the cell corresponding to the second candidate beam.

Therefore, by using the manner 1, after completing the downlink synchronization of the cell corresponding to the second candidate beam, the terminal sends the random access preamble to the second network device immediately based on the random access resource configuration information that is of the cell corresponding to the second candidate beam and that is carried by the random access indication information, so that time of receiving random access public configuration can be reduced.

Manner 2: After receiving the random access indication information, the terminal performs the downlink synchronization of the cell corresponding to the second candidate beam, and obtains, through a broadcast message of the cell corresponding to the second candidate beam, the random access resource configuration information of the cell corresponding to the second candidate beam, and then sends the random access preamble to the second network device.

S805. The terminal receives a random access response message fed back by the second network device and obtains the TA value of the cell corresponding to the second candidate beam.

S806. The terminal sends an msg 3 to the second network device. The msg 3 is an RRC message, and includes a terminal ID.

S807. The terminal receives an msg 4 sent by the second network device. The msg 4 is the RRC message, and competition resolving entity information in the msg 4 is used to acknowledge that the TA value that is obtained by the terminal and that is of the cell corresponding to the second candidate beam is for the terminal.

S808. The terminal feeds back a candidate beam set configuration complete message to the first network device.

In addition, an embodiment of this application further provides a method in which another terminal obtains the TA value of the cell corresponding to the second candidate beam. A main difference from the method shown in FIG. 8 lies in that the first network device coordinates resource with the second network device. The second network device allocates the random access resource configuration information of the cell corresponding to the second candidate beam for the terminal, and the first network device notifies the terminal of the random access resource configuration information. The random access resource configuration information includes a specific time-frequency location indication and a preamble index indication, so that the terminal does not collide with another random access terminal, thereby avoiding random access failure. Therefore, in the method, it can be ensured that the TA value carried by the random access response message in S805 is for the terminal without performing S806 and S807, thereby signaling overheads can be reduced. It should be learned that a difference between the random access resource configuration information in the method and the random access resource configuration information in the method shown in FIG. 8 lies in that the random access resource configuration information in the method includes the preamble index indication, so that the terminal does not collide with another random access terminal, thereby avoiding random access failure.

Further, a case in which after determining to store the TA value of the cell corresponding to the second candidate beam, the terminal converts from receiving the downlink data through the serving beam to receiving the downlink data through the candidate beam specifically includes but is not limited to the following two scenarios.

Scenario 2-1: After the terminal receives the beam configuration information sent by the first network device, the first network device can actively send a switch command based on a signal quality situation of a current serving beam or a current loading situation of the first cell, to make the terminal switch to the cell corresponding to the second candidate beam.

Specifically, the terminal receives the switch command sent by the first network device, where the switch command is used to instruct the terminal to switch from the first cell to the cell corresponding to the second candidate beam, and the switch command further carries uplink resource configuration information of the cell corresponding to the second candidate beam. The terminal sends a switch complete message to the second network device based on the uplink resource configuration information and the TA value of the cell corresponding to the second candidate beam, so that the terminal continues to receive the downlink data through the second candidate beam.

Specifically, the terminal sends, based on the uplink resource configuration information and the TA value of the cell corresponding to the second candidate beam, a switch complete message to the second network device through the uplink transmission beam that is of the terminal side and that corresponds to the second candidate beam, so that the terminal continues to receive the downlink data through the second candidate beam.

Therefore, by using the method provided in this embodiment of this application, fast switch can be realized, and continuity of downlink data transmission can be ensured.

Scenario 2-2: After receiving the beam configuration information sent by the first network device, the terminal sends the SR or the random access preamble to the second network device when determining a radio link failure based on a preset rule, so that the second network device sends the downlink data to the terminal through the second candidate beam.

Specifically, the terminal sends the SR or the random access preamble to the second network device through the uplink transmission beam that is of the terminal side and that corresponds to the second candidate beam, so that the second network device sends the downlink data to the terminal through the second candidate beam.

Similar to the case 1, compared with the prior art, the terminal may need to perform the beam reselection process or the data link failure resuming process in the foregoing case, causing a relatively long data transmission outage time. In an embodiment of this application, the terminal may convert to the candidate beam immediately through a pre-configured candidate beam set, to receive the downlink data. Therefore, by using the method provided in this embodiment of this application, data outage time can be reduced, and the data link failure resuming process or the beam reselection process can be avoided.

By integrating the foregoing two cases, it can be learned that when determining the radio link failure based on the preset rule, the terminal can actively initiate to convert from receiving the downlink data through the serving beam to receiving the downlink data through the candidate beam. Alternatively, the first network device may actively send the switch command, to make the terminal switch to the cell corresponding to the second candidate beam. Therefore, the continuity of downlink data transmission is ensured, data outage time is reduced, and signaling overheads are saved.

It can be learned from the prior art that when the terminal does not send the data in a long time, the first network device may send a radio resource control (Radio Resource Control, RRC) connection release message to the terminal, to instruct the terminal to release an RRC connection, and the terminal enters into an idle state. In the prior art, the terminal needs to perform cell reselection when entering into the connection state from the idle state. However, in the cell reselection process, frequency scanning needs to be first performed, and cell selection is then performed after a frequency having best signal strength is determined. Therefore, reference signals of a plurality of cells need to be measured, taking a relatively long time.

In a possible design, the RRC connection release message further carries a first indication, where the first indication is used to instruct, when the terminal reenters into the connection state, the terminal to access to a cell corresponding to the serving beam before the RRC connection is released. Therefore, when the terminal enters into the connection state from the idle state, the terminal does not need to perform cell reselection, and the terminal directly performs the downlink synchronization in the cell corresponding to the serving beam before the RRC connection is released, receives the broadcast message, and enters into the connection state through the random access process, thereby avoiding cell search process, and time of converting from the idle state to the connection state of the terminal can be saved.

Optionally, the RRC connection release message further carries the random access resource information allocated for the terminal to access to the cell when the terminal reenters into the connection state. The random access resource information includes a time-frequency location indication and a specific preamble index. For example, the terminal can send, on the serving beam before the RRC connection is released, a preamble indicated by the random access resource information, to avoid a random access conflict, so that rapid accessing can be realized.

In addition, when the terminal is in the idle state, assuming that the cell corresponding to the serving beam before the RRC connection is released belongs to the first network device, in this case, the first network device sends the random access response message, the paging message, and a WTTx-related broadcast message to the terminal through the serving beam. For example, a terminal in the idle state detects, according to pre-configured time, whether the paging message exists on the downlink receiving beam that is of the terminal side and that corresponds to the serving beam before the RRC connection is released.

Specifically, when the terminal enters into the idle state from the connection state, the serving beam is converted into a camping beam. The terminal receives the broadcast message or the paging message sent by the first network device through the camping beam, thereby reducing search overheads of searching public messages by the terminal.

It should be noted that when the serving beam is the downlink transmission beam used to send the public message, the serving beam is usually reported by the terminal based on an SS-block measurement. If being reported by the terminal based on CSI-RS measurement, the serving beam cannot become the camping beam. In this case, the beam that is in the candidate beam and that is reported based on the SS-block measurement may be used as the camping beam.

Based on the foregoing embodiments, an embodiment of this application provides a terminal, configured to implement the beam selection method shown in FIG. 4. Referring to FIG. 9, the terminal 900 includes a sending unit 901, a receiving unit 902, and a processing unit 903.

The receiving unit 902 is configured to receive first beam configuration information sent by a first network device, where the first beam configuration information is used to indicate a serving beam, and the serving beam is a downlink transmission beam that is of a first network device side and that is configured by the first network device for the terminal; and
the receiving unit 902 is further configured to receive downlink data sent by the first network device through the serving beam.

For details, refer to the method embodiment shown in FIG. 4 and possible designs and descriptions of related aspects, and details are not described in this application again.

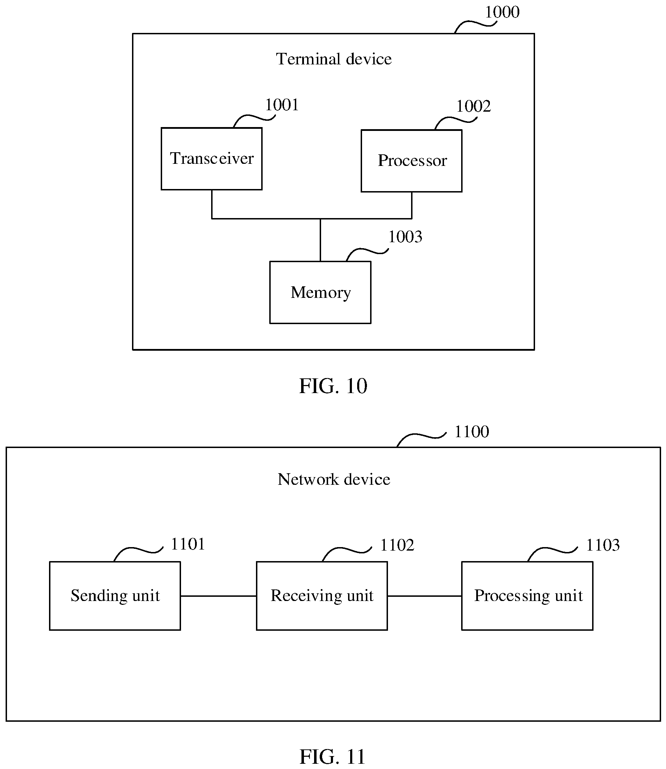

Based on the foregoing embodiments, an embodiment of this application further provides a terminal, configured to implement the beam selection method shown in FIG. 4, and having a function of the terminal 900 shown in FIG. 9. Referring to FIG. 10, the terminal device 1000 includes a transceiver 1001, a processor 1002, and a memory 1003. Functions of the sending unit 901 and the receiving unit 902 are implemented by using the transceiver 1001. A function of the processing unit 903 is implemented by using the processor 1002.

The memory 1003 is configured to store a program, an instruction, and the like. Specifically, the program may include program code. The program code includes a computer operation instruction. The memory 1003 may include a RAM, and may further include a non-volatile memory, for example, at least one magnetic disk memory. The processor 1002 executes the application program stored in the memory 1003 to implement the foregoing functions, so as to implement the beam selection method shown in FIG. 4.

When the instruction stored in the memory 1003 is executed by the processor 1002,
the transceiver 1001 is configured to receive first beam configuration information sent by a first network device, where the first beam configuration information is used to indicate a serving beam, and the serving beam is a downlink transmission beam that is of a first network device side and that is configured by the first network device for the terminal; and
the transceiver 1001 is further configured to receive downlink data sent by the first network device through the serving beam.

For details, refer to the method embodiment shown in FIG. 4 and possible designs and descriptions of related aspects, and details are not described in this application again.

Based on the foregoing embodiments, an embodiment of this application provides a network device, configured to implement the beam selection method shown in FIG. 4. Referring to FIG. 11, the network device 1100 includes a sending unit 1101, a receiving unit 1102, and a processing unit 1103.

The sending unit 1101 is configured to send first beam configuration information to the terminal, where the first beam configuration information is used to indicate a serving beam configured for the terminal, and the serving beam is a downlink transmission beam that is of a network device side and that is configured by the network device for the terminal; and
the sending unit 1101 is further configured to send downlink data to the terminal through the serving beam.

For details, refer to the method embodiment shown in FIG. 4 and possible designs and descriptions of related aspects, and details are not described in this application again.

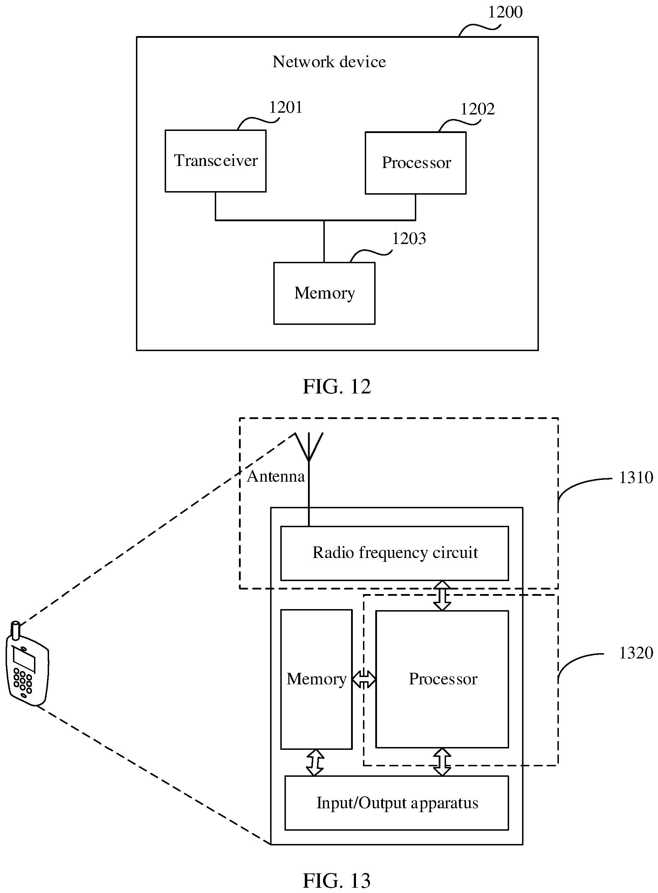

Based on the foregoing embodiments, an embodiment of this application further provides a network device, configured to implement the beam selection method shown in FIG. 4, and having a function of the network device 1100 shown in FIG. 11. Referring to FIG. 12, the network device 1200 includes a transceiver 1201, a processor 1202, and a memory 1203. Functions of the sending unit 1101 and the receiving unit 1102 are implemented by using the transceiver 1201, and a function of the processing unit 1103 is implemented by using the processor 1202.

The memory 1203 is configured to store a program, an instruction, and the like. Specifically, the program may include program code. The program code includes a computer operation instruction. The memory 1203 may include a random access memory (random access memory, RAM), and may further include a non-volatile memory (non-volatile memory), for example, at least one magnetic disk memory. The processor 1202 executes an application program stored in the memory 1203 to implement the foregoing functions, so as to implement the beam selection method shown in FIG. 4.

When the instruction stored in the memory 1203 is executed by the processor 1202,
the transceiver 1201 is configured to send first beam configuration information to a terminal, where the first beam configuration information is used to indicate a serving beam configured for the terminal, and the serving beam is a downlink transmission beam that is of a network device side and that is configured by the network device for the terminal; and
the transceiver 1201 is further configured to send downlink data to the terminal through the serving beam.

For details, refer to the method embodiment shown in FIG. 4 and possible designs and descriptions of related aspects, and details are not described in this application again.

An embodiment of this application further provides a communications apparatus. The communications apparatus may be a terminal device or a circuit. The communications apparatus may be configured to perform actions that are performed by the terminal device in the foregoing method embodiments.

When the communications apparatus is the terminal device, FIG. 13 is a schematic structural diagram of a simplified terminal device. For ease of understanding and convenience of figure illustration, an example in which a terminal device is a mobile phone is used in FIG. 13. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of a software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user and output data to the user. It should be noted that terminal devices of some types may not have the input/output apparatus.

When needing to send data, after performing baseband processing on to-be-sent data, the processor outputs the baseband signal to the radio frequency circuit; and the radio frequency circuit sends the radio frequency signal to outside in a form of the electromagnetic wave by using the antenna after performing radio frequency processing on the baseband signal. When data is sent to the terminal device, the radio frequency circuit receives the radio frequency signal by using the antenna, converts the radio frequency signal into the baseband signal, and outputs the baseband signal to the processor. The processor converts the baseband signal into data, and processes the data. For ease of description, FIG. 13 shows only one memory and processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor having a processing function is considered as a processing unit of the terminal device. As shown in FIG. 13, the terminal device includes a transceiver unit 1310 and a processing unit 1320. The transceiver unit may also be referred to as a transceiver, a transceiver machine, a transceiver apparatus, and the like. The processing unit may also be referred to as a processor, a processing board, a processing module, a processing apparatus, and the like. Optionally, a component for implementing a receiving function in the transceiver unit 1310 may be considered as a receiving unit, and a component for implementing a sending function in the transceiver unit 1310 may be considered as a sending unit, that is, the transceiver unit 1310 includes a receiving unit and a sending unit. The transceiver unit may also be referred to as a transceiver machine, a transceiver, a transceiver circuit, or the like sometimes. The receiving unit may also be referred to as a receiver machine, a receiver, a receiver circuit, or the like sometimes. The sending unit may also be referred to as a transmitter machine, a transmitter, a transmitter circuit, or the like sometimes.

It should be understood that the transceiver unit 1310 is configured to perform a sending operation and a receiving operation of the terminal device side in the foregoing method embodiments, and the processing unit 1320 is configured to perform another operation other than the sending and receiving operation of the terminal device in the foregoing method embodiments.

For example, in an implementation, the transceiver unit 1310 is configured to perform the receiving operation of the terminal device side in step 400 and step 410 in FIG. 4, and/or the transceiver unit 1310 is further configured to perform other sending and receiving steps of the terminal device side in the embodiments of this application.

For another example, in another implementation, the transceiver unit 1310 is configured to perform the receiving operation of the terminal device side in step 501 and step 503 in FIG. 5, and/or the transceiver unit 1320 is further configured to perform other sending and receiving steps of the terminal device side in the embodiments of this application. The processing unit 1320 is configured to perform step 502 in FIG. 5, and/or the processing unit 1320 is further configured to perform other processing steps of the terminal device side in the embodiments of this application.

For another example, in still another implementation, the transceiver unit 1310 is configured to perform the receiving operation of the terminal device side in step 801, step 803, step 805, and step 807 or the sending operation of the terminal device side in step 804, step 806, and step 808 in FIG. 8, and/or the transceiver unit 1310 is further configured to perform other sending and receiving steps of the terminal device side in the embodiments of this application. The processing unit 1320 is configured to perform step 802 in FIG. 8, and/or the processing unit 1320 is further configured to perform other processing steps of the terminal device side in the embodiments of this application.

When the communications apparatus is a chip, the chip includes a transceiver unit and a processing unit. The transceiver unit may be an input/output circuit and a communications interface. The processing unit is a processor, a microprocessor, or an integrated circuit integrated on the chip.

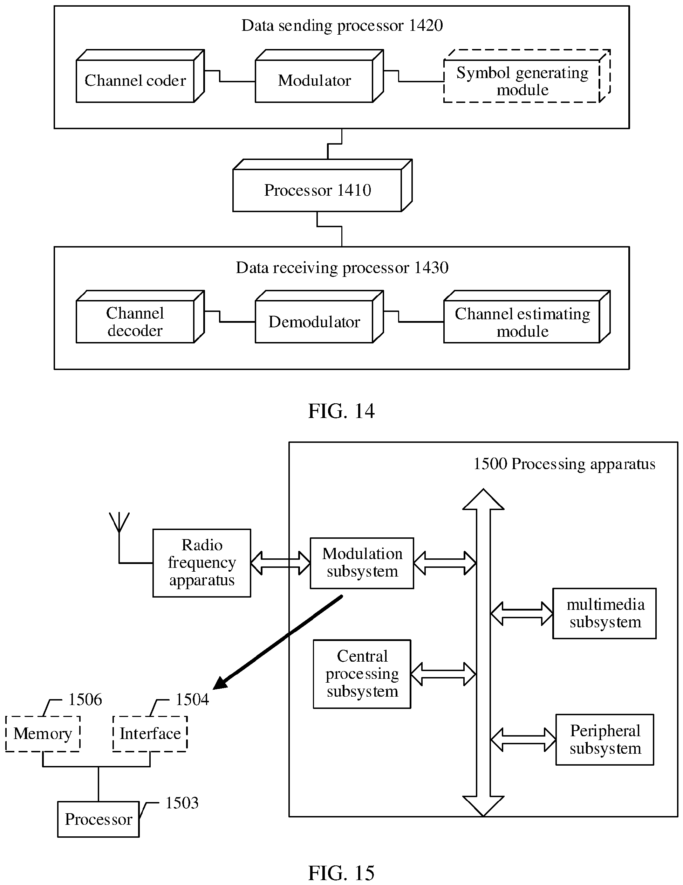

When the communications apparatus in this embodiment is a terminal device, the device shown in FIG. 14 may be referred to. In an example, the device may implement a function similar to that of the processor 1002 in FIG. 10. In FIG. 14, the device includes a processor 1410, a data sending processor 1420, and a data receiving processor 1430. The processing unit 903 in the foregoing embodiments may be the processor 1410 in FIG. 14, and implements corresponding functions. The sending unit 901 and the receiving unit 902 in the foregoing embodiments may be the data sending processor 1420 in FIG. 14. The receiving unit 902 in the foregoing embodiments may be the data receiving processor 1430 in FIG. 14. Although FIG. 14 shows a channel encoder and a channel decoder, it may be understood that the modules do not constitute a limitative illustration for this embodiment, and are only examples.

FIG. 15 shows another form of this embodiment. The processing apparatus 1500 includes modules such as a modulation subsystem, a central processing subsystem, and a peripheral subsystem. The communications apparatus in this embodiment may be used as the modulation subsystem. Specifically, the modulation subsystem may include a processor 1503 and an interface 1504. The processor 1503 implements a function of the processing unit 903, and the interface 1504 implements functions of the sending unit 901 and the receiving unit 902. In a deformation, the modulation subsystem includes a memory 1506, a processor 1503, and a program that is stored on the memory 1506 and that can run on the processor. The processor 1503 performs the method of the terminal device side in the foregoing method embodiments when implementing the program. It should be noted that the memory 1506 may be non-volatile or volatile, and may be located inside the modulation subsystem or in the processing apparatus 1500, as long as the memory 1506 may be connected to the processor 1503.

In another form of this embodiment, a computer readable storage medium is provided, storing an instruction, and when being executed, the instruction implements the method of the terminal device side in the foregoing method embodiments.

In another form of this embodiment, a computer program product is provided, including an instruction, and when being executed, the instruction implements the method of the terminal device side in the foregoing method embodiments.

Based on the above, after configuring the serving beam for the terminal, the first network device sends downlink scheduling information, data, and the like to the terminal through the serving beam, the terminal does not need to listen to scheduling information on another beam any more, and a quantity of blind detection times of the scheduling information can be reduced. To be specific, blink detection of the scheduling information is only performed on the serving beam, thereby energy consumption of the terminal can be saved. In addition, when the terminal cannot receive the downlink data sent by the network device to the terminal through the serving beam, the candidate beam may be used as the serving beam, to further receive the downlink data continued to be sent by the network device to the terminal through the candidate beam. By reporting the first capability information and the identification information of the beam satisfying the preset condition, the terminal may further assist the network device to select the serving beam and the candidate beam.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to embodiments of this application without departing from the spirit and scope of this application. This application is intended to cover these modifications and variations provided that they fall within the scope defined by the following claims of this application and their equivalent technologies.

## Claims

1. A beam selection method, comprising:
receiving, by a terminal, first beam configuration information sent by a first network device, wherein the first beam configuration information is used to indicate a serving beam, and the serving beam is a downlink transmission beam that is of a first network device side and that is configured by the first network device for the terminal; and
receiving, by the terminal, downlink data sent by the first network device through the serving beam.

2. The method according to claim 1, wherein the first beam configuration information is further used to indicate a candidate beam set, the candidate beam set comprises at least one beam, the at least one beam is different from the serving beam, and the candidate beam set is a downlink transmission beam set that is of the first network device side and that is configured by the first network device for the terminal.

3. The method according to claim 1 or 2, wherein before the receiving, by a terminal, first beam configuration information sent by a first network device, the method further comprises:
reporting, by the terminal, first capability information to the first network device, wherein the first capability information is used to indicate that the terminal is a fixed-location terminal.

4. The method according to any one of claims 1 to 3, wherein before the receiving, by a terminal, first beam configuration information sent by a first network device, the method further comprises:
measuring, by the terminal, beam signal strength values respectively corresponding to a plurality of downlink transmission beams of the first network device side, and reporting identification information of a beam satisfying a preset condition to the first network device, wherein the preset condition comprises at least one of the following conditions:
in first preset duration, the beam signal strength value is always greater than or equal to a first threshold;
in second preset duration, a quantity of times that the beam signal strength value is less than or equal to a second threshold is less than or equal to a third threshold; and
in third preset duration, duration in which the beam signal strength value is less than or equal to a fourth threshold is less than or equal to a fifth threshold.

5. The method according to claim 4, wherein the beam signal strength value is a beam signal strength value after filtering by an L3, a beam signal strength value reported by an L1, or a beam signal strength value obtained based on a reference signal sent by the first network device through a single measurement.

6. The method according to claim 4 or 5, wherein measuring, by the terminal, beam signal strength values of the plurality of downlink transmission beams of the first network device side further comprises:
determining, by the terminal based on a maximum beam signal strength value of each downlink transmission beam, a downlink receiving beam that is of a terminal side and that corresponds to each downlink transmission beam; and
after the receiving, by a terminal, first beam configuration information sent by a first network device, the method further comprises:
determining, by the terminal based on the first beam configuration information, a downlink receiving beam that is of the terminal side and that corresponds to the serving beam, and a downlink receiving beam set that is of the terminal side and that corresponds to the candidate beam set.

7. The method according to claim 6, wherein the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal; and
after the receiving, by a terminal, first beam configuration information sent by a first network device, the method further comprises:
determining, by the terminal, that the downlink receiving beam that is of the terminal side and that corresponds to the serving beam is the same as an uplink transmission beam that is of the terminal side and that corresponds to the serving beam, and the downlink receiving beam set that is of the terminal side and that corresponds to the candidate beam set is the same as an uplink transmission beam set that is of the terminal side and that corresponds to the candidate beam set.

8. The method according to any one of claims 2 to 7, wherein the candidate beam set comprises a first candidate beam, and the first candidate beam and the serving beam are beams belonging to a same cell; and
after the receiving, by a terminal, first beam configuration information sent by a first network device, the method further comprises:
sending, by the terminal, a scheduling request SR or a random access preamble to the first network device when determining a radio link failure based on a preset rule, so that the first network device sends downlink data to the terminal through the first candidate beam.

9. The method according to any one of claims 2 to 8, wherein the candidate beam set comprises a second candidate beam, the second candidate beam and the serving beam are beams belonging to different cells, and a cell corresponding to the second candidate beam is under jurisdiction of a second network device, and the first network device is the same as or different from the second network device; and
after the receiving, by a terminal, first beam configuration information sent by a first network device, the method further comprises:
feeding back, by the terminal, a candidate beam set configuration complete message to the first network device when determining that a timing advance TA value of the cell corresponding to the second candidate beam is already stored; or
obtaining, by the terminal, the TA value of the cell corresponding to the second candidate beam when determining that the TA value of the cell corresponding to the second candidate beam is not stored, and feeding back the candidate beam set configuration complete message to the first network device after obtaining the TA value of the cell corresponding to the second candidate beam.

10. The method according to claim 9, wherein after the receiving, by a terminal, first beam configuration information sent by a first network device, the method further comprises:
receiving, by the terminal, a switch command sent by the first network device, wherein the switch command is used to instruct the terminal to switch from the cell corresponding to the serving beam to the cell corresponding to the second candidate beam, and the switch command further carries uplink resource configuration information of the cell corresponding to the second candidate beam; and
sending, by the terminal, a switch complete message to the second network device based on the uplink resource configuration information and the TA value of the cell corresponding to the second candidate beam, so that the second network device continues to send the downlink data to the terminal through the second candidate beam.

11. The method according to any one of claims 1 to 10, further comprising:
when the terminal is in an idle state, receiving, by the terminal, a paging message sent by the first network device through the serving beam before an RRC connection is released.

12. A beam selection method, comprising:
sending, by a first network device, first beam configuration information to a terminal, wherein the first beam configuration information is used to indicate a serving beam configured for the terminal, and the serving beam is a downlink transmission beam that is of a first network device side and that is configured by the first network device for the terminal; and
sending, by the first network device, downlink data to the terminal through the serving beam.

13. The method according to claim 12, wherein the first beam configuration information is further used to indicate a candidate beam set configured for the terminal, the candidate beam set comprises at least one beam, the at least one beam is different from the serving beam, and the candidate beam set is a downlink transmission beam set that is of the first network device side and that is configured by the first network device for the terminal.

14. The method according to claim 12 or 13, wherein before the sending, by a first network device, first beam configuration information to a terminal, the method further comprises:
receiving, by the first network device, first capability information reported by the terminal, wherein the first capability information is used to indicate that the terminal is a fixed-location terminal.

15. The method according to any one of claims 12 to 14, wherein before the sending, by a first network device, first beam configuration information to a terminal, the method further comprises:
receiving, by the first network device, identification information that is reported by the terminal and that is of a beam satisfying a preset condition.

16. The method according to any one of claims 13 to 15, wherein the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal.

17. The method according to any one of claims 13 to 16, wherein the candidate beam set comprises a first candidate beam, and the first candidate beam and the serving beam are beams belonging to a same cell; and
after the sending, by a first network device, first beam configuration information to a terminal, the method further comprises:
receiving, by the first network device, an SR or a random access preamble sent by the terminal; and
sending, by the first network device, the downlink data to the terminal through the first candidate beam.

18. The method according to any one of claims 13 to 17, wherein the candidate beam set comprises a second candidate beam, the second candidate beam and the serving beam are beams belonging to different cells, and a cell corresponding to the second candidate beam is under jurisdiction of a second network device, and the first network device is the same as or different from the second network device; and
after the sending, by a first network device, first beam configuration information to a terminal, the method further comprises:
receiving, by the first network device, a candidate beam set configuration complete message fed back by the terminal.

19. The method according to claim 18, wherein after the sending, by a first network device, first beam configuration information to a terminal, the method further comprises:
sending, by the first network device, a switch command to the terminal, wherein the switch command is used to instruct the terminal to switch from the cell corresponding to the serving beam to the cell corresponding to the second candidate beam, and the switch command further carries uplink resource configuration information of the cell corresponding to the second candidate beam.

20. The method according to any one of claims 12 to 19, further comprising:
when the terminal is in an idle state, sending, by the first network device, a paging message to the terminal through the serving beam before an RRC connection is released.

21. A terminal, comprising a memory, a processor, and a transceiver, wherein the memory stores an instruction, and when the instruction is executed by the processor,
the transceiver is configured to receive first beam configuration information sent by a first network device, wherein the first beam configuration information is used to indicate a serving beam, and the serving beam is a downlink transmission beam that is of a first network device side and that is configured by the first network device for the terminal; and
the transceiver is further configured to receive downlink data sent by the first network device through the serving beam.

22. The terminal according to claim 21, wherein the first beam configuration information is further used to indicate a candidate beam set, the candidate beam set comprises at least one beam, the at least one beam is different from the serving beam, and the candidate beam set is a downlink transmission beam set that is of the first network device side and that is configured by the first network device for the terminal.

23. The terminal according to claim 21 or 22, wherein the transceiver is further configured to:
report first capability information to the first network device before receiving the first beam configuration information sent by the first network device, wherein the first capability information is used to indicate that the terminal is a fixed-location terminal.

24. The terminal according to any one of claims 21 to 23, wherein the processor is configured to:
measure beam signal strength values respectively corresponding to a plurality of downlink transmission beams of the first network device side before the transceiver receives the first beam configuration information sent by the first network device, and report, through the transceiver, identification information of a beam satisfying a preset condition to the first network device, wherein the preset condition comprises at least one of the following conditions:
in first preset duration, the beam signal strength value is always greater than or equal to a first threshold;
in second preset duration, a quantity of times that the beam signal strength value is less than or equal to a second threshold is less than or equal to a third threshold; and
in third preset duration, duration in which the beam signal strength value is less than or equal to a fourth threshold is less than or equal to a fifth threshold.

25. The terminal according to claim 24, wherein the beam signal strength value is a beam signal strength value after filtering by an L3, a beam signal strength value reported by an L1, or a beam signal strength value obtained based on a reference signal sent by the first network device through a single measurement.

26. The terminal according to claim 24 or 25, wherein the processor is further configured to:
determine, based on a maximum beam signal strength value of each downlink transmission beam, a downlink receiving beam that is of a terminal side and that corresponds to each downlink transmission beam; and
after receiving the first beam configuration information sent by the first network device, the processor is further configured to:
determine, based on the first beam configuration information, a downlink receiving beam that is of the terminal side and that corresponds to the serving beam, and a downlink receiving beam set that is of the terminal side and that corresponds to the candidate beam set.

27. The terminal according to claim 26, wherein the serving beam is the downlink transmission beam that is of the first network device side and that is configured by the first network device for the terminal, and is also an uplink receiving beam that is of the first network device side and that is configured by the first network device for the terminal; and the candidate beam set is the downlink transmission beam set that is of the first network device side and that is configured by the first network device for the terminal, and is also an uplink receiving beam set that is of the first network device side and that is configured by the first network device for the terminal; and
the processor is further configured to:
after the transceiver receives the first beam configuration information sent by the first network device, determine that the downlink receiving beam that is of the terminal side and that corresponds to the serving beam is the same as an uplink transmission beam that is of the terminal side and that corresponds to the serving beam, and the downlink receiving beam set that is of the terminal side and that corresponds to the candidate beam set is the same as an uplink transmission beam set that is of the terminal side and that corresponds to the candidate beam set.

28. The terminal according to any one of claims 22 to 27, wherein the candidate beam set comprises a first candidate beam, and the first candidate beam and the serving beam are beams belonging to a same cell; and
the transceiver is further configured to: after receiving the first beam configuration information sent by the first network device, send an SR or a random access preamble to the first network device when the processor determines a radio link failure based on a preset rule, so that the first network device sends downlink data to the terminal through the first candidate beam.

29. The terminal according to any one of claims 22 to 28, wherein the candidate beam set comprises a second candidate beam, the second candidate beam and the serving beam are beams belonging to different cells, and a cell corresponding to the second candidate beam is under jurisdiction of a second network device, and the first network device is the same as or different from the second network device; and
the transceiver is further configured to: after receiving the first beam configuration information sent by the first network device, feed back a candidate beam set configuration complete message to the first network device when the processor determines that a timing advance TA value of the cell corresponding to the second candidate beam is already stored; or
obtain the TA value of the cell corresponding to the second candidate beam when the processor determines that the TA value of the cell corresponding to the second candidate beam is not stored, and feed back the candidate beam set configuration complete message to the first network device through the transceiver after obtaining the TA value of the cell corresponding to the second candidate beam.

30. The terminal according to claim 29, wherein the transceiver is further configured to:
receive a switch command sent by the first network device after receiving the beam configuration information sent by the first network device, wherein the switch command is used to instruct the terminal to switch from the cell corresponding to the serving beam to the cell corresponding to the second candidate beam, and the switch command further carries uplink resource configuration information of the cell corresponding to the second candidate beam; and
the processor sends a switch complete message to the second network device through the transceiver based on the uplink resource configuration information and the TA value of the cell corresponding to the second candidate beam, so that the second network device continues to send the downlink data to the terminal through the second candidate beam.

31. The terminal according to any one of claims 21 to 30, wherein the transceiver is further configured to:
when the terminal is in an idle state, receive a paging message sent by the first network device through the serving beam before an RRC connection is released.

32. A network device, comprising a memory, a processor, and a transceiver, wherein the memory stores an instruction, and when the instruction is executed by the processor,
the transceiver is configured to send first beam configuration information to a terminal, wherein the first beam configuration information is used to indicate a serving beam configured for the terminal, and the serving beam is a downlink transmission beam that is of a network device side and that is configured by the network device for the terminal; and
the transceiver is further configured to send downlink data to the terminal through the serving beam.

33. The network device according to claim 32, wherein the first beam configuration information is further used to indicate a candidate beam set configured for the terminal, the candidate beam set comprises at least one beam, the at least one beam is different from the serving beam, and the candidate beam set is a downlink transmission beam set that is of the network device side and that is configured by the network device for the terminal.

34. The network device according to claim 32 or 33, wherein the transceiver is further configured to:
receive first capability information reported by the terminal before sending the first beam configuration information to the terminal, wherein the first capability information is used to indicate that the terminal is a fixed-location terminal.

35. The network device according to any one of claims 32 to 34, wherein the transceiver is further configured to:
before sending the first beam configuration information to the terminal, receive identification information that is reported by the terminal and that is of a beam satisfying a preset condition.

36. The network device according to any one of claims 33 to 35, wherein the serving beam is the downlink transmission beam that is of the network device side and that is configured by the network device for the terminal, and is also an uplink receiving beam that is of the network device side and that is configured by the network device for the terminal; and the candidate beam set is the downlink transmission beam set that is of the network device side and that is configured by the network device for the terminal, and is also an uplink receiving beam set that is of the network device side and that is configured by the network device for the terminal.

37. The network device according to any one of claims 33 to 36, wherein the candidate beam set comprises a first candidate beam, and the first candidate beam and the serving beam are beams belonging to a same cell; and
the transceiver is further configured to:
receive an SR or a random access preamble sent by the terminal after sending the first beam configuration information to the terminal; and
send the downlink data to the terminal through the first candidate beam.

38. The network device according to any one of claims 33 to 37, wherein the candidate beam set comprises a second candidate beam, the second candidate beam and the serving beam are beams belonging to different cells, and a cell corresponding to the second candidate beam is under jurisdiction of a second network device, and the network device is the same as or different from the second network device; and
the transceiver is further configured to:
receive a candidate beam set configuration complete message fed back by the terminal after sending the beam configuration information to the terminal.

39. The network device according to claim 38, wherein the transceiver is further configured to:
send a switch command to the terminal after sending the first beam configuration information to the terminal, wherein the switch command is used to instruct the terminal to switch from the cell corresponding to the serving beam to the cell corresponding to the second candidate beam, and the switch command further carries uplink resource configuration information of the cell corresponding to the second candidate beam.

40. The network device according to any one of claims 32 to 39, wherein the transceiver is further configured to:
when the terminal is in an idle state, send a paging message to the terminal through the serving beam before an RRC connection is released.

41. A computer readable storage medium, storing a computer program, wherein when the program is executed by a processor, the communication method according to any one of claims 1 to 11 is implemented.

42. A computer readable storage medium, storing a computer program, wherein when the program is executed by a processor, the communication method according to any one of claims 12 to 20 is implemented.
